(19) Europäisches Patentamt

European Patent Office

Office européen des brevets

(11) **EP 0 744 273 B1**

(12) **EUROPEAN PATENT SPECIFICATION**

(45) Date of publication and mention
of the grant of the patent:
**14.11.2001 Bulletin 2001/46**

(21) Application number: **95907846.0**

(22) Date of filing: **07.02.1995**

(51) Int Cl.[7]: **B29C 53/12**, B29C 53/84,
A22C 13/00

(86) International application number:
**PCT/JP95/00158**

(87) International publication number:
**WO 95/21052 (10.08.1995 Gazette 1995/34)**

(54) **METHOD AND APPARATUS FOR PRODUCING RING-SHAPED CASING FILM**

VERFAHREN UND VORRICHTUNG ZUM HERSTELLEN VON RINGFÖRMIGER
VERPACKUNGSFOLIE

PROCEDE ET DISPOSITIF DE PRODUCTION DE PELLICULE D'EMBALLAGE A STRUCTURE
ANNULAIRE

(84) Designated Contracting States:
**BE DE NL**

(30) Priority: **07.02.1994 JP 1355194**

(43) Date of publication of application:
**27.11.1996 Bulletin 1996/48**

(73) Proprietor: **Asahi Kasei Kabushiki Kaisha
Osaka-shi, Osaka 530-8205 (JP)**

(72) Inventors:
• **NAKANO, Shingo
Mie 513 (JP)**

• **IKEDA, Hisashi
Mie 514-11 (JP)**

(74) Representative: **Strehl Schübel-Hopf & Partner
Maximilianstrasse 54
80538 München (DE)**

(56) References cited:
**EP-A- 0 500 216        GB-A- 1 431 519
JP-B- 49 042 542        JP-B- 50 039 112**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method of manufacturing a ring-shaped casing film which is obtained by curving a straight tubular film, and also relates to a manufacturing apparatus therefor.

PRIOR ART

As a method of manufacturing a ring-shaped casing film used for producing a ham or a sausage, in which a heat shrinkable thermoplastic tubular film made of polyvinlydene chloride group resin or the like, is curved to continuously manufacture a casing film, a method comprising the steps of pinching a tubular film between two pairs of pinch rolls after the tubular film is inflated with gas, and spirally turning the tubular film filled with the gas between the pair of pinch rollers so as to thermally process the tubular film (by heating and cooling or only by heating) has conventionally been well-known.

For example, DE2322220 discloses a method and a device for manufacturing a tubular casing film, in which a tubular film charged with gas is spirally fed around several rod-like rolls that are arranged around a heating and cooling core roll so as to be rotatable about their axes with no gaps therebetween.

Guides are provided around the array of the rod-like rolls for spirally feeding the tubular film while the rod-like rolls are rotated about their axes in association with the rotation of the core roll, and accordingly, the tubular film is heated and cooled to be thermally shrunk in order to produce a ring-shaped casing film having a predetermined radius of curvature. In the above-mentioned device, the tubular film charged with gas is fed to the array of the rod-like rollers through a pair of introducing pinch rollers, the tubular film being heated and cooled to achieve thermal shrinkage while it is spirally fed around the array of the rod-like rolls by means of the guide, and finally the tubular film is taken out from the array of the rod-like rolls through a pair of take-out pinch rollers. Thereafter, the tubular film is sent to a next station for winding up the tubular film and so forth. The heating and cooling of the tubular film is made by thermal conduction from the core roll to the tubular film through the intermediary of the rod-like rolls which make direct contact with the tubular film. In this device, the outer surface of the tubular film contacts the rod-like rolls which are rotated about their axes in order to reduce the frictional resistance therebetween, and accordingly, wrinkling of the tubular films can be avoided. Thus it is possible to increase the speed of feeding the tubular film, resulting in enhancement of the productivity. However, the area of contact of the outer surface of the tubular film with the rod-like rolls is small, and accordingly, the heat conduction between the tubular film and the rod-like rolls is insufficient, resulting in insufficient thermal shrinkage. Thus, this apparatus has the disadvantage that the ring-shaped film casing has an insufficient curvature.

Japanese Patent Publication No. 58-23210 discloses a method in which a tubular film is wound around an array of cylindrical rolls which freely rotate while the entire peripheral surface of the tubular film is uniformly heated by means of a hot water bath (alternatively, liquid bath, heated air, steam or the like), and thereafter, the tubular film is drawn and taken up by a pair of conical pinch rollers. This method is effective for preventing the tubular film from being subjected to thermal strain, and for preventing occurrence of folding and pleating or the like since the entire peripheral surface of the tubular film is uniformly heated.

When, however, in this method, the feeding speed of the tubular film which has been spirally wound around the array of rod-like rolls is increased, there can hardly occur a difference in thermal shrinkage between the inner and outer peripheries of the ring of the tubular film, and further, the tubular film has a float-up force so that it tends to separate from the array of rod-like rolls. Further, it is likely that the tubular film has insufficient curvature since the tubular film expands in the longitudinal direction thereof.

Japanese Patent Publication No. 63-56850 discloses a method in which a tubular film is spirally wound on a smooth heating cylindrical roll rotating around its axis to be once held thereon, the inner peripheral surface of the tubular film is subjected to contact heating and radiant heating while the outer periphery of the tubular film is heated by forced air blasting from a movable hot air blower, and then, the tubular film is naturally cooled. In this method and the device therefor, it is not required to continuously turn the tubular film on the cylindrical roll, that is, the tubular film can be wound at a comparatively high speed, and further, since the inner peripheral part of the tubular film wound on the cylindrical roll is significantly heated, the tubular film is preferably curved. With the use of such a heat-treatment, the heat-shrinkage at the inner peripheries of turns of the tubular film wound around the cylindrical roll can be sufficient while the heat shrinkage at the outer peripheries thereof can be decreased, and accordingly, the curvature of the thus produced ring-shaped casing film is still maintained even after the tubular film charged therein with meat is sterilized by heating at about 80°C. Thereby it is possible to exhibit an excellent dimensional stability.

However, since the inner peripheral surfaces of the turns of the tubular film make direct contact with the smooth outer surface of the cylindrical roll during heating, a large frictional resistance occurs, and accordingly, it is difficult to continuously feed the tubular film at a high speed so as to enhance the productivity. Further, since the inner surfaces of the turns of the tubular film are held by the outer surface of the cylindrical roll, it is likely that heat-traces are shown at the boundary of the contact surface of the tubular film.

As mentioned above, the conventional methods of continuously curving a tubular film have disadvantages in the steps of winding or heating of the tubular film although several advantages can be obtained. They are effective for saving labor, but not excellent in the productivity, the ability of curving, the external appearance of the film and the like.

An object of the present invention is to provide a method of and an apparatus for continuously manufacturing a ring-shaped casing film, which is highly preferable in view of the curving of the tubular film, and in which the inner peripheral parts of turns of a tubular film are significantly heated so that the thus formed casing film is excellent in dimensional stability, in ability of curving, in the external appearance and the productivity.

DISCLOSURE OF THE INVENTION

According to the present invention, there is provided a method of producing a ring-shaped casing film comprising the steps of:

charging gas in a heat-shrinkable thermoplastic tubular film (1) having a predetermined length;

spirally feeding said tubular film (1) around a drum-like array of rod-like rolls (2) which are arranged with predetermined gaps therebetween, said rolls being rotated around their axes;

said process being characterized by the further steps of blowing heated gas from the inside of said drum-like array of the rod-like rolls in radial direction through the gaps between said rod-like rolls (2) while said tubular film (1) is fed spirally around said array of rod-like rolls which are rotated around their axes so as to heat and shrink said tubular film;

thereafter blowing cooling gas in radial direction through the gaps between said rod-like rolls so as to cool said tubular film; and

taking off said shrunk tubular film from said array of rod-like rolls and discharging the charged gas from said tubular film.

Further, according to the present invention, there is provided an apparatus for producing a ring-shaped casing film, comprising:

a means (8) for continuously introducing a tubular film (1) charged with gas;

an array of a plurality of rod-like rolls (2) which can be rotated about their axes, and which are arranged to form a drum-like shape with gaps therebetween, said array having said introduced tubular film spirally wound therearound;

a drive means for rotating said rod-like rolls around their axes;

a guide means for spirally feeding said tubular film to be wound around said array of rod-like rolls (2);

said apparatus further comprising:

a main heating means (4) located inside of said array of rod-like rolls, for radially blowing heated gas through the gaps between said rod-like rolls to the upstream side of said tubular film spirally fed around said array of rod-like rolls;

a cooling means (7) for radially blowing cooling air through the gaps between said rod-like rolls to the downstream side of said tubular film spirally fed around said array of rod-like rolls; and

a means (9) for taking up said heat-shrunk tubular film from said array of rod-like rolls.

Explanation will be hereinbelow made of preferred embodiments of the present invention with reference to the drawings.

BRIEF DESCRIPTION OF THE DRAWINGS

Figs. 1a and 1b are plan and side views schematically illustrating an embodiment of a manufacturing device according to the present invention, in which a side frame is not shown for the sake of brevity;

Figs. 2a and 2b are side and plan views schematically illustrating a configuration wherein a tubular film is fed and wound around a manufacturing device according to the present invention as shown in Fig. 1;

Figs. 3a and 3b are side and plan views schematically illustrating a condition in which the tubular film is heat-treated;

Figs. 4a is a side view showing a configuration in which the inner peripheral part of one turn of the tubular film and the rod-like rolls are brought into contact with each other, and Fig. 4b is a side view illustrating the tubular film which is curved;

Fig. 5 is a front view schematically illustrating the main heat-treatment device in the above-mentioned embodiment;

and

Fig. 6 is a graph showing the typical characteristic of longitudinal thermal shrinkage of a polyvinylidene chloride tubular film having a film thickness of 50 μm.

BEST MODES OF THE INVENTION

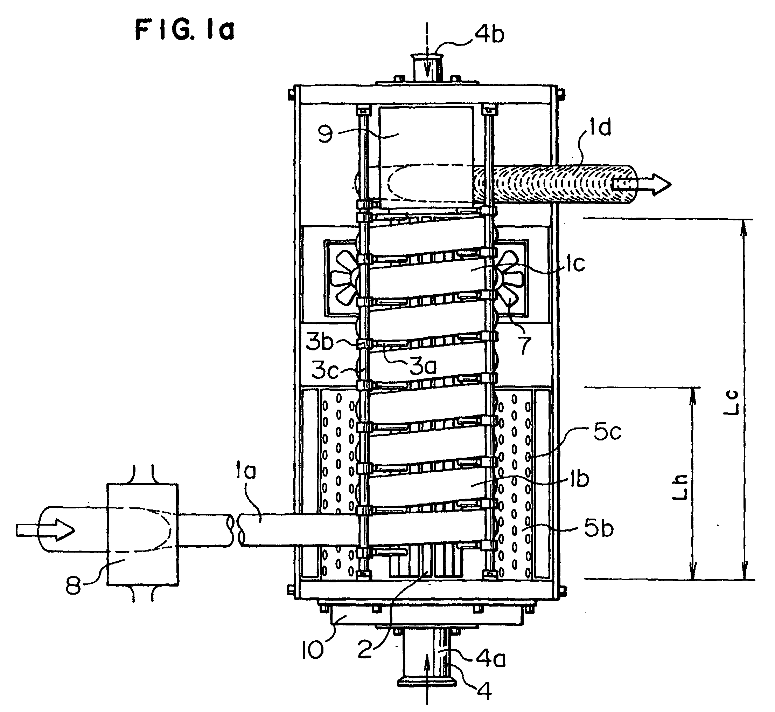

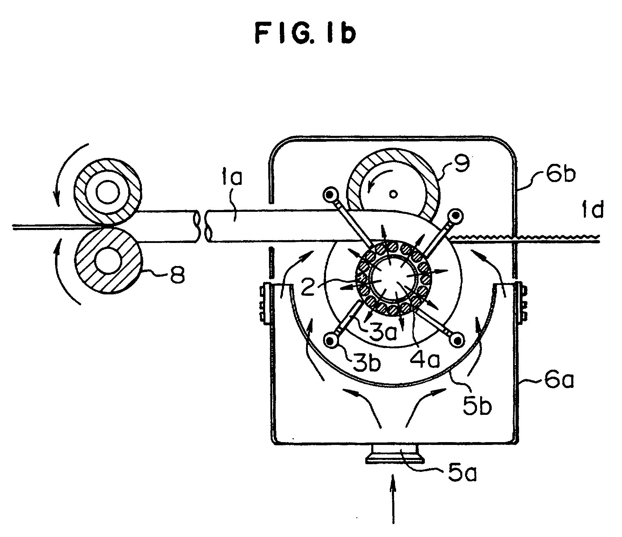

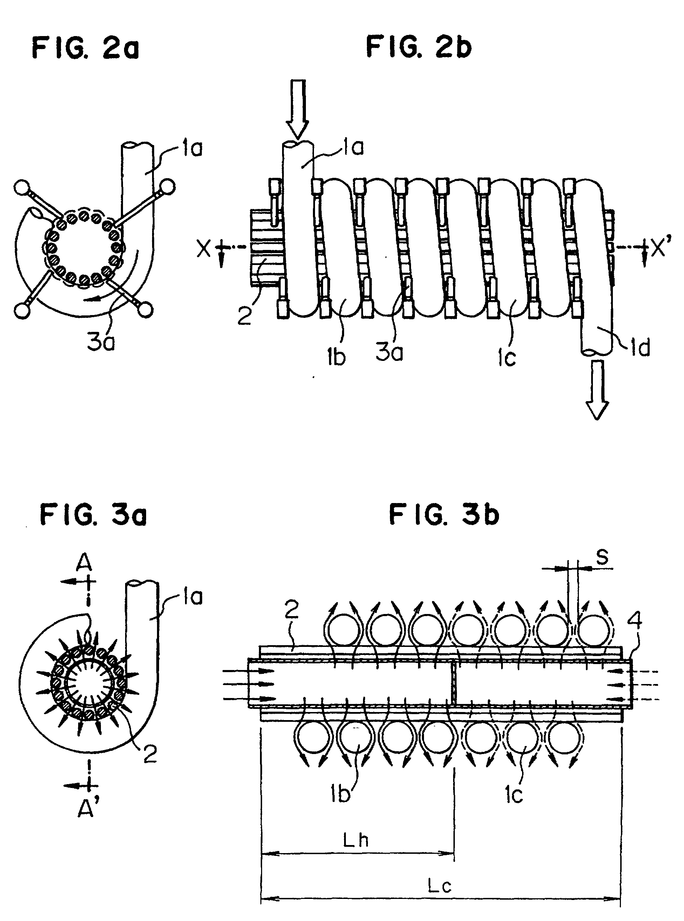

Referring to Figs. 1a and 1b, a tubular film 1 to be thermally shrunk is wound around a drum composed of several rod-like rolls arranged circumferentially. These rod-like rolls are rotated around their axes in synchronization with one another by means of a drive device (which is not shown). Four support columns 3c are circumferentially arranged around the drum, and several guide pins 3 are extended toward the drum from the support columns 3. These guide pins 3a are provided at predetermined intervals, longitudinal of the support columns 3c by means of proximal end parts 3b which are rotatably journalled to the support columns 3c. These guide pins 3a hold turns of the tubular film circumferentially wound around the drum so that the tubular film 1a inflated with gas charged therein is spirally fed along the peripheral surface of the drum. Figs. 2a and 2b shows details of the configuration of the spiral feeding of the tubular film.

Further, referring to Figs. 1a and 1b, a pair of inlet side pinch rollers 8 are provided below the drum and spaced from the outer periphery of the drum, and a pair of outlet side pinch rollers are provided above the drum and spaced from the outer periphery of the drum.

With this arrangement, the tubular film 1a inflated with gas is fed onto the drum which is constituted by a circumferential array of the rod-like rolls 2, and is led around the drum through respective rotations of the rod-like rolls 2 about their axes. Then, the tubular film 1a is spirally fed on the outer peripheral surface of the drum, being guided by the guide pins 3a, and finally, it is taken out from the drum by means of the outlet side pinch rollers 9. Thereafter, the tubular film 1a is fed to a next process station such as a wind-up station. As clearly shown in Figs. 1a and 1b, the drum and the outlet side pinch rollers 9 are arranged inside of a support frame for the drum, but the inlet side pinch rollers 8 are arranged outside of the support frame.

The drum is incorporated therein which a main heat-treatment device 4, and auxiliary heating devices 5a, 5b are attached to heating housings 6a, 6b so as to surround the lower half of the drum. Further, an auxiliary cooling device 7 is attached by means of the support frame so as to surround the top part of the drum. With this arrangement, the tubular film 1a led into by the inlet side pinch rollers 8 is heated for shrinkage so as to be curved by the lower half Lh of the drum, that is, on the upstream side thereof in the feed direction of the tubular film, and then is cooled and cured by the top part of the drum, that is, in a cooling range upstream thereof in the feed direction of the tubular film. Thereafter, the tubular film is taken up from the drum by means of the outlet side pinch rollers 9.

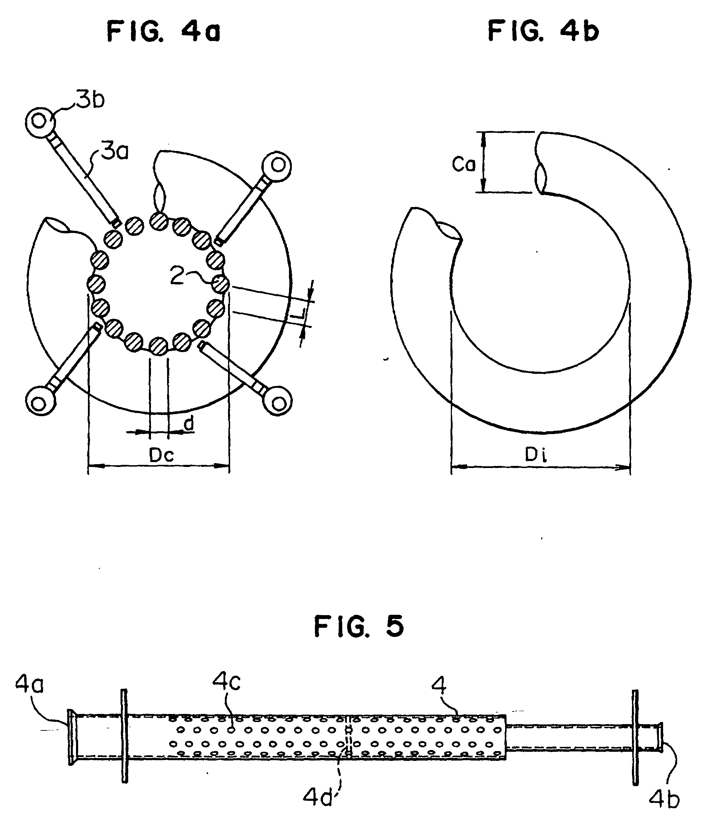

The main heat-treatment device 4, as shown in detail in Fig. 5, is composed of a gas feed pipe having a heated gas inlet port 4a at one end, a cooling gas inlet port at the other end, and an outer peripheral wall formed therein perforations. The inside of the gas feed pipe is partitioned into a heated gas chamber and a cooling gas chamber by means of a barrier 4d. Accordingly, pressurized gas generated from blowers or the like, is introduced into both gas chambers through the inlet ports 4a, 4b, respectively, and then is radially jetted from the perforations 4c in the outer peripheral wall of the gas feed pipe 4. Thus, the jetted gas is blown through the gaps between the rod-like rolls 2 constituting the drum so as to heat and cool the turns 1b of the tubular film 1a which is spirally fed along the outer peripheral surface of the drum at their inner peripheries. It goes without saying that the structure of the main heat-treatment device according to the present invention should not be limited to the above-mentioned arrangement, but it may have any of other arrangements. For example, two gas feed pipes independent from each other may be used for heated gas and cooling gas, respectively. Further, the perforations 4c may have different sizes and may be distributed variously so as to adjust the jetting speed and blowing volume of gas along the longitudinal direction in which the spiral turns 1b of the tubular film are advanced.

Further, conveniently, the above-mentioned blower incorporates an electric gas heating device so as to generate the heated gas in order to facilitate the adjustment of the temperature of gas, and the volume of gas.

Further, the auxiliary heating device is composed of a perforated panel 5b, that is, diffusing panel attached to the lower part of a heating housing 6a, extending substantially over the lower half of the drum, that is, in a range of a heating length Lh. The, perforated panel 5b defines an annular heated gas chamber which surround the one half of the entire periphery of the drum, and heated gas is introduced into the annular heated gas chamber from an external heating device through an inlet port 5a, and is then jetted through heated air jetting holes 5c toward the outer peripheral surface of the drum so as to heat the turns 1b of the tubular film which is spirally fed on the outer peripheral surface of the drum at their outer peripheries. It is noted that the above-mentioned heating housing composed of a one half part 6a made of steel, and an openable upper housing 6b formed of, for example, transparent heat-resistant resin such as polycarbonate resin or polyimide resin and combined with the one half part 6a, is preferable and convenient since the manipulating on the drum can be enhanced and the spiral turning of the tubular film thereon can be checked.

Further, the above-mentioned auxiliary cooling device as shown in Fig. 1a, may be composed of a plurality of blowers 7 attached to a support frame in a range of cooling length (Lc - Lh). It is desirable to attach the blowers 7 to the support frame so that the jetted cooling gas is blown onto the outer peripheries of the turns of the tubular film, and the attachment positions of the blowers 7 are near to the rear end of the cooling length as shown in Fig. 1a. It is noted that the temperature of atmospheric air at the inlet side of the blowers is desirably in a range of 0 °C to a temperature lower than a heat-shrinkage temperature of the tubular film in the case of using the above-mentioned blower arrangement.

Explanation will hereinbelow be made of the operation of the above-mentioned apparatus according to the present invention.

The tubular film 1a which is inflated so as to have a bore diameter of, for example, 41 mm is fed by the inlet side pinch rollers 8 onto the outer peripheral surface of the drum in the form of a circumferential array of the rod-like rolls 2 which are rotated around their axes, and accordingly, the tubular film 1a is wound on the peripheral surface of the drum while it is spirally fed thereon by the rotation of the rod-like rolls 2 and the action by the guide pins 3a. Further, the inner peripheries of the turns 1b of the tubular film 1a are heated by heated gas blown from the heated air chamber of the main heat-treatment device through the perforations 4c, and further, the outer peripheries of the turns 1b of the tubular film are heated by heated gas blown from the jet holes 5a of the auxiliary heating device, on the upstream side as views in the advance direction of the turns 1b of the tubular film. Then, the inner peripheries of the turns 1c of the tubular film are cooled by cooling gas jetted from the cooling gas chamber through the perforations 4c while the outer peripheries of the turns 1c of the tubular film are cooled by cooling air blown from the auxiliary cooling devices 7 so as to from a ring-like casing film 1c which is then taken up from the drum by the outlet side pinch rollers 9, and from which charged gas is then discharged before it is fed as a primary product 1d into a next process station such as a wind-up station.

In the above-mentioned case, if the tubular film is curved so that the inner diameter of the turns of the tubular film becomes 150 mm, the inner peripheries of the turns of the tubular film should be shrunk in a range of 22 % (drawing rate of outer peripheries is 22 %) to 35 % (drawing rate of outer peripheries is 0 %). Further, if the tubular film is fed out at a feed speed of 10 m/min, the drawing speed of the inner peripheries of the turns of the curved tubular film should be set in a range of 7 to 8 m/min. At this time, a speed difference before and after the heat shrinkage of the inner peripheries of the turns of the tubular film falls in a range of 2 to 3 m/min. Further, when the turning speed of the tubular film is increased, the above-mentioned speed difference becomes larger. Namely, if the tubular film is fed at a speed of 32 m/min on the inlet side, the speed on the outlet side becomes 25 to 21 m/min, and accordingly, the above-mentioned speed difference becomes 7 to 11 m/min. Further, the speed difference can be determined by a difference between the peripheral speeds of the pinch rollers 8, 9 in pairs in which each pair of rollers are combined in parallel with each other in the arrangement according to the present invention.

The allowable value of the above-mentioned speed difference is important in the above-mentioned process of spirally winding the tubular film. That is, there occurs the problem how the inner peripheries of the turns of the tubular film which causes a large speed difference before and after the heat-shrinkage when the turning speed of the tubular film is increased are held and wound on the outer peripheral surface of the drum, and how this speed difference is absorbed.

In a conventional process in which a tubular film wound by several turns by means of a smooth cylindrical roller which is driven by a drive shaft, the frictional resistance between the inner peripheries of the turns of the tubular film is large so that the allowable speed difference as mentioned above is small so that the inlet side speed of the tubular film is 10 m/min. at most. That is, in this conventional process, the tubular film is merely wound on the cylindrical roll on which it is spirally turned, and accordingly, the heat-shrinkage of the inner peripheries of the turns of the tubular film is hindered by the frictional resistance between the tubular film and the outer surface of the roller. Thus, the smooth and rapid heat-shrinkage can hardly be made. Further, when the heat-shrinkage is delayed, the inner peripheries of extra turns of the tubular film cannot be relieved on the cylindrical roller, and as a result, the inner peripheries of the turns of the tubular film are folded and pleated.

Meanwhile, in the above-mentioned arrangement of the apparatus according to the'present invention, the allowable speed difference during spiral turning of the tubular film is relatively high. Even though the tubular film is fed out at a speed of, for example, 32m/min., the inner peripheries of the turns of the tubular film can be smoothly and rapidly heat-shrunk, and the above-mentioned speed difference can be absorbed well. The reason will be explained below:

Since the rod-like rolls 2 are rotated about their axes to feed the tubular film wound around the drum in its longitudinal direction, the tubular film wound on the drum by several turns can be spirally fed by turning with no hindrance, and accordingly, even though the rod-like rolls 2 are rotated at a peripheral speed higher than the outlet side speed of the inner peripheries of the turns of the curved tubular film (that is, higher than the peripheral speed of the outlet side of the pinch rollers), the inner peripheries of the turns of the curved tubular film having an increased friction resistance due to heating, can be excessively fed so as to be slackened in the turning direction thereof. Further, the slackened inner peripheries of the turns of the tubular film are taken into the gaps between the rod-like rolls 2, as shown in Fig. 4a, so that an extra length for holding the inner diameters of the turns of the tubular film can be increased. With this arrangement, according to the present invention, the heated air is forced to blow through the gaps between the rod-like rolls 2, and accordingly, the inner peripheries of the turns of the slackened tubular film can be smoothly and rapidly heat-shrunk (the heating process will be hereinbelow detailed).

It is noted that even though the rod-like rolls 2 are rotated at a peripheral speed which is higher than the outlet speed of the inner peripheries of the turns of the curved tubular film during cooling subsequent to the heating, since the rod-like rolls 2 slip at the inner peripheries of the turns of the tubular film having a frictional resistance which is decreased as it is cooled, it is possible to prevent the inner peripheries of the turns of the tubular film from being excessively fed as during the heating.

As mentioned above, in the process of turning or winding the tubular film, according to the present invention, the tubular film is forced to turn through the rotation of the rod-like rolls around their axes, and accordingly, a large speed difference before and after the heat-shrinkage can be absorbed so that the turning speed can be increased.

Further, in the process of turning the tubular film, according to the present invention, the tubular film 1a has to be turned on the drum while it is guided by the guide pins 3a so that the turns 1b thereof are always shifted in the longitudinal direction (X-X') of the drum as sown in Fig. 2b. That is, the turning of the tubular film by the rod-like rolls 2 rotated about their axes, is made only in the circumferential direction of the drum. Accordingly, should the guide pins 3a be eliminated, the turns of the tubular films would be caught together on the front end of the drum, and accordingly, the tubular film could hardly be spirally turned, smoothly. Further, the intervals of the spiral turns 1b of the tubular film on the drum are set by the guide pins so as to define passages for the blown gas as mentioned latter, and accordingly, the guide pins 3a take an important role in the heat-treatment of the tubular film, according to the present invention.

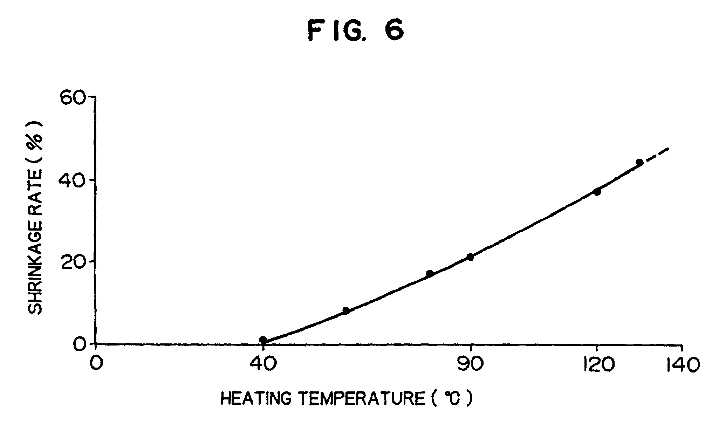

Next, explanation will be made of a heat-treatment process for the tubular film according to the present invention. Referring to Fig. 6 which shows a typical heat-shrinkage characteristic of a polyvinylidene chloride group tubular film having a thickness of 50 $\mu$m, the heating temperature (°C) of the tubular film by a hot water bath (or hot oil bath) is indicated on the abscissa, and the shrinkage factor of the tubular film in the longitudinal direction of the latter, which is obtained by dipping the tubular film in the above-mentioned hot water bath (or hot oil bath) for ten minutes, is indicated on the ordinate. It is noted that dots in the figure indicate measured points.

To ensure that a tubular film having a bore diameter of, for example, 38 mm in the form of a raw material, and having a heat-shrinkage characteristic as shown in Fig. 6, is inflated so as to have a bore diameter of 41 mm and is curved so as to have turns having an inner diameters of 150 mm, the inner peripheries of the turns of the tubular film have to fall in a range of 22 % (the drawing rate of the outer peripheries is 22 %) to 35 % (the drawing rate of the outer peripheries is 0 %. Accordingly, in order to heat-shrink the inner peripheries of the turns of the above-mentioned polyvinylidene chloride group tubular film in the above-mentioned range, it is necessary to heat at least the inner peripheries of the turns of the tubular film in a range of 90 to 120 deg.C. However, should only the outer peripheries of turns of the tubular film be heated while the outer peripheries thereof are not heated, the heat-shrinkage ability inherent to the tubular film remains at the outer peripheries of the turns so that the dimensions of the tubular film after curving becomes unstable. If a ring-like casing film produced from such a tubular film, is subjected to heat-sterilization at about 80 deg.C after meat is charged therein, the curvature of the outer peripheries of the turns is likely to be relieved since the heat-shrinkage ability of the outer peripheries of the turns is large. Accordingly, in order to produce a ring-like casing film having an excellent dimensional stability after curving, it is required that the inner peripheries of the turns of the tubular film are significantly heated while the tubular film is entirely heated so as to gradually lower the heating temperature from the inner peripheries to the outer peripheries of the turns thereof, and the heat-shrinkage factor of the outer peripheries of the turns should be set to be not higher than at least about 15 %, preferably from 9 to 2 %. At this time, the temperature of the outer peripheries of the turns of the tubular film is set to be in a range of 80 to 110 deg.C.

In the heat-treatment process for the tubular film, according to the present invention, the entire peripheries of the turns of the tubular film can be heated and cooled while the inner peripheries of the turns thereof can be significantly heated. The present invention effectively use the features obtained by heat transmission of heat by the gas and the heat-transmission through direct-contact as will be explained below.

The first feature of the present invention is such that the heat-treatment can be carried out without disturbing the turning condition of the tubular film to be turned by the forced blowing of gas, that is, substantially no buoyancy due to a difference in density between liquid used for the heat-treatment, and the tubular film to be turned, is caused, and further, since gas is used as heat-treatment medium, the frictional resistance at the boundary surface of the tubular film can be neglected substantially.

The second feature of the present invention is such that the heat-transmission rate to the tubular film can be adjusted in a wide range by adjusting the blowing speed of the gas. Further, the heat transmission rate can be selected in a wide range by adjusting the temperature of the gas.

The third feature of the present invention is such that the heat transmission rate at any of various parts of the tubular film on turning can be adjusted by specifying the blowing direction of gas.

Further, with the combination of the thermal transmission by contact through the rod-like rolls as stated in the above-mentioned feature, the following feature can be obtained further:

The fourth feature of the present invention is such that heat-shrinkage, and cooling for curing can be alternately carried out rapidly and smoothly, with no constraint to the dimensional change of the inner peripheries of the turns of the tubular film, by alternately carrying out the heat transmission by gas and the heat transmission by contact.

In the heating process utilizing the above-mentioned features of the present invention, heated gas is radially jetted from the inside of the drum as shown in Fig. 3a, and is then blown through the gaps between the rod-like rolls 2 of the drum. Further, as shown in Fig. 3b, the heated air is aerodynamically led around the outer peripheries of the turns 1b of tubular film which is continuously turned through the gaps between the turns 1b of the tubular film. At this time, the blowing speed of the heated gas is rapidly lowered when it flows from the jetting part to the outer peripheries of the turns of the tubular film, and accordingly, the heat transmission rate toward the tubular film can be high at the inner peripheries of the turns of the tubular film but can be decreased toward the outer peripheries thereof. For example, in the present invention, if a tubular film which is inflated so as to have a bore diameter of 41 mm and which has a heat-shrinkage characteristic shown in Fig. 6, is turned around a drum whose circumscribed circle has a diameter of 120 mm, so as to be curved into turns having an inner diameter of 150 mm, the blowing speed of the heated air jetted from the inside of the drum and having a temperature of 135 °C is in a range of 9 to 7 m/s at the gaps between the rod-like rolls 2, and is in a range of 6 to 3 m/s at the gaps between the turns 1b of the tubular film, and the convection speed is in a range of 2 to 1 m/s at the outer peripheries of the turns 1b of the tubular film. Further, in the heating process according to the present invention, the inner peripheries of the turns 1b of the tubular film can be heated through contact heat transmission by means of the rod-like rolls 2 of the drum which are nearest to the heated air jetting part so as to be heated at a high heat transmission rate.

In the curved tubular film which has been heated as mentioned above, if the above-mentioned polyvinylidene chloride group tubular film is fed out at a speed of, for example, 32 m/min, slight pleats could be sometimes found in a portion from the inner periphery to side surfaces of the leading end part of the first turn of the tubular film on the drum, but the pleats are completely eliminated therefrom in the vicinity of the trailing end part of the first turn thereof. Thus, the tubular element is completely curved at the second or third turn of the tubular film.

Further, the heating process according to the present invention exhibits a sufficient heating capacity. However, more preferably, the heated gas from the inside of the drum is encountered by heated gas jetted outside of the drum on the outer peripheries of the turns of the tubular film so that the stream of the heated gas at the outer peripheries of the turns of the tubular film can be rectified, and accordingly, the volume of heat transmission can be adjusted. For example, the blowing speed of the heated gas jetted outside of the drum is 0.2 to 0.5 m/s at the outer peripheries of the turns of the tubular film. Further, the temperature and blowing speed of the heated gas jetted from the inside of the drum are preferably higher than those of the heated gas jetted outside of the drum.

Further, according to the present invention, the polyvinylidene chloride group tubular film having a heat-shrinkage characteristic shown in Fig. 6 can be heated by heated gas at a higher limited temperature of about 140°C, and naturally, it can be held without breakage even though the turning of the tubular film is stopped. On the contrary, in a prior art process which has relied upon heating by contact or heating by a hot water bath, the heating temperature of the tubular film is 80 to 105 °C at most. Thus, the heating temperature according to the present invention is higher than that of the conventional heating process. It is however noted that the temperature of the tubular film has to be decreased sufficiently so as to withstand the pressure and the tension exerted by the outlet side pinch rollers in order to take up the tubular film which has been curved by the heated gas at a relatively high temperature.

It is noted that the cooling process according to the present invention, subsequent to the above-mentioned heating, can be carried out while the tubular film having been heated and softened is held in the turned state, and accordingly, the curved tubular film can sufficiently withstand the pressure and the tension exerted by the outlet side pinch rollers.

In the cooling process according to the present invention, cooling gas is radially jetted from the inside of the drum, similar to the heated gas, is then blown through the gaps of the rod-like rolls 2 of the drum, and is then blown through the gaps between the turns of the tubular film so as to be led around the outer peripheries of the turns of the tubular film. For example, the blowing speed of the cooling gas is in a range of 2 to 3 m/s at the gaps between the rod-like rolls.

In the cooling process according to the present invention, the cooling gas jetted from the inside of the drum is preferably encountered by cooling gas jetted outside of the drum at the outer peripheries of the turns of the tubular film turning around the drum so as to enhance the cooling capacity at the outer peripheries of the turns of the tubular film. The blowing speed of the cooling gas jetted outside of the drum in a range of, for example, 2 to 1 m/s.

As mentioned above, according to the present invention, with the use of the process of turning a tubular film and the process of heat-treating a tubular film, as mentioned above, a tubular film can be curved while it is turned at a high speed which has not been able to be attained, conventionally.

It is noted that air having a relative humidity less than 90 % or steam is used as the gas to be forcibly blown in the present invention. The forced flow in the present invention is intended to carry out heat transmission by means of a stream which is forcibly induced.

In the present invention, in order that the cylindrical film is continuously turned in its turning direction and is taken in to the gaps between the rod-like rolls so as to be smoothly subjected to smooth and rapid heat-shrinkage, the drum preferably satisfies the following formulae:

$$15 \leq L \leq 25$$

$$0.65 \leq d/L \leq 0.85$$

$$0.70 \leq Dc/Di \leq 0.85$$

where d is a diameter (mm) of the rod-like rolls, L is an interaxial distance (mm) of two adjacent rod-like rolls, Di is a diameter (mm) of the turns of the tubular film, and Dc is a diameter (mm) of a circumscribing circle of the drum (refer to Figs. 4a and 4a for details).

Further, in the method according to the present invention, in order to produce a ring-like casing film having a stable inner diameter of turns, the outlet speed of the tubular film, relative to the inlet speed thereof, is desirably set in accordance with a bore diameter or an inner diameter of turns of the tubular film after curving. This can facilitate the operation of the apparatus. According to the present invention, the outlet speed of the tubular film, relative to the inlet speed thereof, is set with reference to the following formula:

$$Vo = \alpha DiVi / (Ca + Di)$$

where Ca is a bore diameter of the curved tubular film, Di is an inner diameter of the turns of the tubular film, Vi is a peripheral speed of the inlet side pinch roller, Vo is a peripheral speed of the outlet side pinch roller, $\alpha$ is a factor indicating a longitudinal dimension of the tubular film. It is noted that the above-mentioned factor $\alpha$ can be calculated from a result of tests under a condition in which the temperature and the blowing volumes of the heated gas are set to be constant, and with the use of this value and the above-mentioned formula, the outlet speed of the tubular film, relative to the inlet speed thereof, can be set with respect to any of several sizes of the tubular film. For example, in the case of a tubular film having a heat-shrinkage characteristic as shown in Fig. 6, it is in a range of 0.88 to 0.92. Further, in this case, the above-mentioned inlet speed Vi is in a range of 7 to 40 m/s, and the above-mentioned Ca is in a range of 50 to 95 mm while the above-mentioned Di is in a range of 90 to 300 mm.

Further, in order to stably turn the tubular film on the drum, the peripheral speed of the rod-like rolls is preferably adjusted in accordance with a frictional resistance between the outer surface of the tubular film and the outer surfaces of the rod-like rolls. That is, preferably, if the frictional resistance is low, the peripheral speed is adjusted to a high value, but if the frictional resistance is high, the peripheral speed is adjusted to a low value. The peripheral speed Vf preferably satisfies the following formula with respect to the inlet speed Vi and the outlet speed Vo:

$$\alpha Vi \geq Vf > Vo$$

It is noted that if Vf > $\alpha$Vi, the rubbing of the tubular film turned around the longitudinal axis thereof readily becomes larger, and accordingly, it is not preferably in the case of curving a tubular film on which a trade mark or the like is printed. Further, it Vf $\leq$ Vo, the turning of the tubular film readily stagnates so as to be unpreferable.

Further, in the method according to the present invention, the pressure of gas charged in the tubular film is preferably adjusted in order to slightly increase the bore diameter Cr of the tubular film which is a raw material fed out from the inlet side pinch roller, during heating, thereby to preferably turn the tubular film charged with the gas. That is, the pressure of gas charged in the tubular film is preferably adjusted so that the bore diameter Ca of the curved tubular film is set to a value which is 1 to 1.15 times as large as the bore diameter of the tubular film before curving. Further, it is desirable to satisfy the following formula.

$$1.05 \leq Ca/Cr \leq 1.12$$

where Ca is a bore diameter (mm) of the curved tubular film, and Cr is the bore diameter (mm) of the tubular film as a

EP 0 744 273 B1

raw material.

It is noted that the bore diameter Ca can be adjusted by connecting a compressed gas tube to one end of the tubular film 1d as shown in Fig. 1a upon stopping of the turning of the tubular film, a compressed gas tube is connected to one end of the tubular film, over the extent of the heating length Lh.

Further, the method according to the present invention, the number of turns of the tubular film on the drum is preferably 3 to 15, but more preferably in a range satisfying the following formula.

$$6 \leq N \leq 12$$

where N is a number of turns of the tubular film. In the case shown in Fig. 2b, the number N is 7.

Further, the method according to the present invention, the space S between the turns of the tubular film on the drum are preferably 8 to 18 mm, and more preferably in a range satisfying the following formula:

$$8 \leq S \leq 15$$

where S is the space (mm) between the turns of the tubular film turning on the drum (refer to Fig. 3b).

It is noted that the outer diameter of a guide pins is preferably 5 to 12 mm. Further, the space S is desirably larger than the outer diameter of the guide pins. If the space S would be smaller that the outer diameter of the guide pins, the turns of the tubular film would be caught between the adjacent guide pins, resulting in high possibility of stagnation of turning.

Further, in the method according to the present invention, it is preferable to previously spray a lubricant powder onto the tubular film before it is turned, in particular in the case of turning a tubular film which exhibits viscosity at its outer surface. It is noted that those produced from a starch powder or the like can be used as the lubricant powder.

In the method according to the present invention, if the blowing volume of gas forcibly blown as mentioned above, is adjusted along the longitudinal axis of the drum, the heat-treatment for the tubular film can be preferably performed. That is, in the heat-treatment according to the present invention, if the blowing volume of the heated gas is greater in the front half of the heating length than in the rear half thereof while the blowing volume of the cooling gas is greater in the rear half of the cooling length than in the front half, the heating can be significantly made for the inner peripheries of the turns of the tubular film, and further, the heating for the entire circumference of the turns can be preferably made.. Then, the tubular film is cooled so as to be stabilized in order to obtain a curved tubular film. Thus, a ring-like casing film having a smooth external appearance with no shrunk pleats found from the inner peripheries to the outer peripheries of the turns of tubular film can be produced.

It is noted that the above-mentioned blowing volume can be adjusted by changing the blowing volume of gas jetted from the inside of the drum in the longitudinal direction of the drum, and/or by changing the positions of gas jets and the blowing volume of gas jetted outside of the drum.

Further, the blowing speed of gas to be forcibly blown, is preferably 0.05 to 20 m/s, and more preferably 0.1 to 15 m/s.

Further, in the method according to the present invention, heating and cooling by gas jetted from the inside of the drum can be adjacent to each other in the longitudinal direction of the drum. Further, the length of the drum required for the heat-treatment is satisfactorily set to be less than 1.5 m, and in more preferably to be less than 1.0 m. At this time, the ratio between the heating length in the longitudinal direction of the drum and the length of the drum (heating-length + cooling length) is preferably in a range of 0.35 to 0.75, and in more preferably in a range which satisfies the following formula:

$$0.45 \leq Lh/Lc \leq 0.65$$

where Lh is the heating length in the axial direction of the drum, and Lc is the length of the drum (heating length + cooling length).

Further, in the method according to the present invention, the temperature of heated gas to be forcibly blown, is preferably determined in accordance with the bore diameter of the tubular film, the inner diameter of the turns of the tubular film to be curved, and the heat-shrinkage characteristic of the tubular film as shown in Fig. 6, that is, the temperature range according to the present invention is preferably set so that the heat-shrinkage rate in the longitudinal direction of the tubular film is not less than 5 % but not higher than 60 %. Further, the temperature of the cooling gas is preferably set so as to be not less than 0 deg.C but not higher than a temperature at which the heat-shrinkage rate is less than 5 %. Specifically, in the case of a polyvinylidene chloride group tubular film having a heat-shrinkage characteristic as shown in Fig. 6, the temperature of the heated gas is in a range of 100 to 140 °C, and the temperature of the cooling gas is in a range of 0 to 40 °C.

In the apparatus according to the present invention, the rod-like rolls 2 which are circumferentially arranged so as to constitute the drum as shown in Fig. 1a, are supported at their opposite ends by means of bearings, and are attached at their one end with small diameter gears through which the rod-like rolls 2 can be driven in a bundle by means of a ring gear (which is not shown) within a gear box 10. It is noted that metal bearings may be used as the above-mentioned bearings. However, a small-sized slip bearing or the like made of a composite material composed of heat-resistant and friction-resistant polyethylene tetrafluoride resin or the like is preferably used so that the several rod-like rolls 2 can be arranged with relatively small interaxial distances. Further, it is extremely preferable to coat the outer surfaces of the rod-like rolls with polyethylene tetrafluoride resin having a heat-resistance and friction-resistance or the like.

Further, in the apparatus according to the present invention, each of the guide pins 3a shown in Fig. 1b, is preferably composed of a rotary member having a lubricity which is obtained by polyethylene tetrafluoride resin or the like which rotatably fitted on a stationary center shaft. Further, the proximal end parts 3b of the guide pins are attached to the support columns 3c arranged in parallel with the longitudinal axis of the drum, and the spaces therebetween can be adjusted in accordance with the bore diameter of the tubular film to be turned. Further, the distal ends of the guide pins are as near to the drum as possible, but it is prevented from making contact with the drum. For example, a preferable arrangement is such that the distal ends of the guide pins 3a are located in the gaps between the rod-like rolls 2 as shown in Fig. 4a. Should the space between the guide pins 3 and the rod-like rolls be large, the heated and softened tubular film would be possibly caught to the distal ends of the guide pins so as to be broken.

In the apparatus according to the present invention, the inlet side pinch rollers 8 are preferably arranged in the vicinity of the front end of the heating length Lh with a space from the drum. Further, the space between the inlet side pinch rollers 8 and the drum is specifically in a range of 0.5 to 5 m, and more preferably in a range of 2 to 5 m. If the inlet side pinch rollers 8 are preferably incorporated therein with a shift device for shifting the inlet side pinch rollers 8 within the above-mentioned space, the pressure of the gas charged in the tubular film can be finely adjusted.

In the apparatus according to the present invention, if the outlet side pinch rollers 9 are arranged adjacent to the rear end of the cooling length of the drum as shown in Fig. 1a, the tubular film can be directly taken up from its turning condition so as to be extremely preferable.

It is noted that a polyvinylidene chloride group film, a polyamide group film, a polyethylene group film or a polystyrene group film, or the like, or a laminated film thereof can be used.

Reference Examples

The present invention will be explained in detail in the form of the reference examples, but the present invention should not limit to these reference examples. Further, the several conditions of the reference examples are shown in Table I.

Reference Example 1:

A polyvinylidene chloride group tubular film as a raw material having a bore diameter Cr = 57 mm, a 5 folding width of 90 mm and a thickness of 50 µm and having a heat-shrinkage characteristic as shown in Fig. 6 was inflated with compressed air at a pressure of $9 \times 10^3$ Pa (0.09 kg/cm$^2$), and was spirally turned around the drum, having a circumscribing circle of a diameter Dc = 210 mm, at an ) inlet speed of 32.0 m/min, at a peripheral speed of the rod-like rolls of 25.6 m/min and an outlet speed of 22.5 m/min, as shown by the reference example 1 in Table 1, was heated by heated gas at a maximum temperature of 135 deg.C, and was subsequently cooled by cooling gas at a temperature of 23 °C, thereby a ring-like casing film was produced with the use of the apparatus as shown in Fig. 1a. When the thus obtained ring-like casing film was inflated by charging compressed air at a pressure of $14 \times 10^3$ Pa (0.14 kg/cm$^2$) thereinto, completely no pleats were found in ) the portions extending from the inner peripheries to the outer peripheries of the turns of the curved tubular film having a bore diameter Ca = 62 mm, and the inner diameter Di = 250 mm of the turns. When the film was heated in a hot water bath at a temperature of 82 °C for 60 min., the shrinkage factor was 0.5 % at the inner peripheries of the turns, and 5.5 % at the outer peripheries of the turns.

Reference Example 2:

A polyvinylidene chloride group tubular film as a raw material having a bore diameter Cr = 51 mm, a folding width of 80 mm and a thickness of 50 µm and having a heat-shrinkage characteristic as shown in Fig. 6 was inflated with compressed air at a pressure of $1 \times 10^4$ Pa (0.10 kg/cm$^2$), and was spirally turned around the drum the same as that of the reference example 1 in table 1, at an inlet speed of 32.0 m/min, at a peripheral speed of the rod-like rolls of 26.0 m/min and an outlet speed of 23.0 m/min, was heated by heated gas at a temperature of 135 °C, and was subsequently cooled by cooling gas at a temperature of 23 °C, thereby a ring-like casing film was produced. When the thus obtained ring-like casing film was inflated by charging compressed air at a pressure of $16 \times 10^3$ Pa (0.16 kg/cm$^2$) thereinto, completely no pleats were found in the portions extending from the inner peripheries to the outer peripheries of the turns of the curved tubular film having a bore diameter Ca = 55 mm, and the inner diameter Di = 251 mm of the turns. When the film was heated in a hot water bath at a temperature of 82 °C for 60 min., the shrinkage factor was 0.3 % at the inner peripheries of the turns, and 8.0 % at the outer peripheries of the turns.

Reference Example 3:

A polyvinylidene chloride group tubular film as a raw material having a bore diameter Cr = 45 mm, a folding width of 70 mm and a thickness of 50 µm and having a heat-shrinkage characteristic as shown in Fig. 6 was inflated with compressed air at a pressure of $12 \times 10^3$ Pa (0.12 kg/cm$^2$), and was spirally turned around the drum the same as that of the reference example 1 in table 1, at an inlet speed of 32.0 m/min, at a peripheral speed of the rod-like rolls of 26.7 m/min and an outlet speed of 23.5 m/min, was heated by heated gas at a temperature of 135 °C, and was subsequently cooled by cooling gas at a temperature of 23 deg.C, thereby a ring-like casing film was produced. When the thus obtained ring-like casing film was inflated by charging compressed air at a pressure of $18 \times 10^3$ Pa (0.18 g/cm$^2$) thereinto, completely no pleats were found in the portions extending from the inner peripheries to the outer peripheries of the turns of the curved tubular film having a bore diameter Ca = 49 mm, and the inner diameter Di = 249 mm of the turns. When the film was heated in a hot water bath at a temperature of 82 °C for 60 min., the shrinkage factor was 0 % at the inner peripheries of the turns, and 3.0 % at the outer peripheries of the turns.

Reference Example 4:

A polyvinylidene chloride group tubular film as a raw material having a bore diameter Cr = 41 mm, a folding width of 65 mm and a thickness of 50 µm and having a heat-shrinkage characteristic as shown in Fig. 6 was inflated with compressed air at a pressure of $9 \times 10^3$ Pa (0.09 kg/cm$^2$), and was spirally turned around the drum the same as that of the reference example 1 in table 1, at an inlet speed of 32.0 m/min, at a peripheral speed of the rod-like rolls of 27.1 m/min and an outlet speed of 23.8 m/min, was heated by heated gas at a temperature of 135 deg.C, and was subsequently cooled by cooling gas at a temperature of 23 °C, thereby a ring-like casing film was produced. When the thus obtained ring-like casing film was inflated by charging compressed air at a pressure of $2 \times 10^4$ Pa (0.20 kg/cm$^2$) thereinto, completely no pleats were found in the portions extending from the inner peripheries to the outer peripheries of the turns of the curved tubular film having a bore diameter Ca = 45 mm, and the inner diameter Di = 249 mm of the turns. When the film was heated in a hot water bath at a temperature of 82 °C for 60 min., the shrinkage factor was 0.5 % at the inner peripheries of the turns, and 5.0 % at the outer peripheries of the turns.

Reference Example 5:

A polyvinylidene chloride group tubular film as a raw material having a bore diameter Cr = 38 mm, a folding width of 60 mm and a thickness of 50 µm and having a heat-shrinkage characteristic as shown in Fig. 6 was inflated with compressed air at a pressure of $13 \times 10^3$ Pa (0.13 kg/cm$^2$), and was spirally turned around the drum, having a circumscribing circle of a diameter Dc = 120 mm, at an inlet speed of 32.0 m/min, at a peripheral speed of the rod-like rolls of 22.9 m/min and an outlet speed of 22.1 m/min, as shown by the reference example 1 in Table 1, was heated by heated gas at a maximum temperature of 135 °C, and was subsequently cooled by cooling gas at a temperature of 23 °C, thereby a ring-like casing film was produced with the use of the apparatus as shown in Fig. 1a. When the thus obtained ring-like casing film was inflated by charging compressed air at a pressure of $21 \times 10^3$ Pa (0.21 kg/cm$^2$) thereinto, completely no pleats were found in the portions extending from the inner peripheries to the outer peripheries of the turns of the curved tubular film having a bore diameter Ca = 41 mm, and the inner diameter Di = 150 mm of the turns. When the film was heated in a hot water bath at a temperature of 82 °C for 60 min., the shrinkage factor was 0 % at the inner peripheries of the turns, and 5 % at the outer peripheries of the turns.

Reference Example 6:

A polyvinylidene chloride group tubular film as a raw material having a bore diameter Cr = 46 mm, a folding width of 75 mm and a thickness of 50 µm and having a heat-shrinkage characteristic as shown in Fig. 6 was inflated with compressed air at a pressure of $11 \times 10^3$ Pa (0.11 kg/cm$^2$), and was spirally turned around the drum the same as that of the reference example 5 in table 1, at an inlet speed of 32.0 m/min, at a peripheral speed of the rod-like rolls of 23.6 m/min and an outlet speed of 20.8 m/min, was heated by heated gas at a temperature of 135°C, and was subsequently cooled by cooling gas at a temperature of 23 °C, thereby a ring-like casing film was produced. When the thus obtained ring-like casing film was inflated by charging compressed air at a pressure of $17 \times 10^3$ Pa (0.17 kg/cm$^2$) thereinto, completely no pleats were found in the portions extending from the inner peripheries to the outer peripheries of the turns of the curved tubular film having a bore diameter Ca = 52 mm, and the inner diameter Di = 148 mm of the turns. When the film was heated in a hot water bath at a temperature of 82 °C for 60 min., the shrinkage factor was 0.5 % at the inner peripheries of the turns, and 4.5 % at the outer peripheries of the turns.

Reference Example 7:

A polyvinylidene chloride group tubular film as a raw material having a bore diameter Cr = 35 mm, a folding width of 55 mm and a thickness of 50 μm and having a heat-shrinkage characteristic as shown in Fig. 6 was inflated with compressed air at a pressure of $14 \times 10^3$ Pa (0.14 kg/cm$^2$), and was spirally turned around the drum the same as that of the reference example 5 in table 1, at an inlet speed of 32.0 m/min, at a peripheral speed of the rod-like rolls of 25.2 m/min and an outlet speed of 22.2 m/min, was heated by heated gas at a temperature of 135 °C, and was subsequently cooled by cooling gas at a temperature of 23 °C, thereby a ring-like casing film was produced. When the thus obtained ring-like casing film was inflated by charging compressed air at a pressure of $23 \times 10^3$ Pa (0.23 kg/cm$^2$) thereinto, completely no pleats were found in the portions extending from the inner peripheries to the outer peripheries of the turns of the curved tubular film having a bore diameter Ca = 39 mm, and the inner diameter Di = 145 mm of the turns. When the film was heated in a hot water bath at a temperature of 82 °C for 60 min., the shrinkage factor was 0 % at the inner peripheries of the turns, and 5.0 % at the outer peripheries of the turns.

Reference Example 8:

A polyvinylidene chloride group tubular film as a raw material having a bore diameter Cr = 35 mm, a folding width of 55 mm and a thickness of 50 μm and having a heat-shrinkage characteristic as shown in Fig. 6 was inflated with compressed air at a pressure of 0.14 kg/cm$^2$, and was spirally turned around the drum, having a circumscribing circle of a diameter Dc = 83 mm, at an inlet speed of 24.0 m/min, at a peripheral speed of the rod-like rolls of 20.6 m/min and an outlet speed of 15.6 m/min, as shown by the reference example 8 in Table 1, was heated by heated gas at a maximum temperature of 135 °C, and was subsequently cooled by cooling gas at a temperature of 23 °C, thereby a ring-like casing film was produced with the use of the apparatus as shown in Fig. 1a. When the thus obtained ring-like casing film was inflated by charging compressed air at a pressure of $23 \times 10^3$ Pa (0.23 kg/cm$^2$) thereinto, completely no pleats were found in the portions extending from the inner peripheries to the outer peripheries of the turns of the curved tubular film having a bore diameter Ca = 39 mm, and the inner diameter Di = 100 mm of the turns. When the film was heated in a hot water bath at a temperature of 82 °C for 60 min., the shrinkage factor was 1 % at the inner peripheries of the turns, and 2.5 % at the outer peripheries of the turns.

Reference Example 9:

A polyvinylidene chloride group tubular film as a raw material having a bore diameter Cr = 38 mm, a folding width of 60 mm and a thickness of 50 μm and having a heat-shrinkage characteristic as shown in Fig. 6 was inflated with compressed air at a pressure of $13 \times 10^3$ Pa (0.13 kg/cm$^2$), and was spirally turned around the drum the same as that of the reference example 8 in table 1, at an inlet speed of 24.0 m/min, at a peripheral speed of the rod-like rolls of 21.1 m/min and an outlet speed of 15.1 m/min, was heated by heated gas at a temperature of 135 °C, and was subsequently cooled by cooling gas at a temperature of 23 °C, thereby a ring-like casing film was produced. When the thus obtained ring-like casing film was inflated by charging compressed air at a pressure of $21 \times 10^3$ Pa (0.21 kg/cm$^2$) thereinto, completely no pleats were found in the portions extending from the inner peripheries to the outer peripheries of the turns of the curved tubular film having a bore diameter Ca = 41 mm, and the inner diameter Di = 102 mm of the turns. When the film was heated in a hot water bath at a temperature of 82 °C for 60 min., the shrinkage factor was 1.5 % at the inner peripheries of the turns, and 4.0 % at the outer peripheries of the turns.

INDUSTRIALLY USABILITY

As clearly understood in the above-mentioned reference example, it is possible to produce a ring-like casing film which is excellent in dimensional stability after curving, and which is also excellent in curving ability, in external appearance of a product, and in productivity.

TABLE 1

| Item | Mark | Unit | Reference Example 1 | Reference Example 2 | Reference Example 3 |
|---|---|---|---|---|---|
| Kind of Tubular Film | - | - | PVDC | PVDC | PVDC |
| Bore Diameter before Curving | Cr | mm | 57 | 51 | 45 |
| Folded Width | - | mm | 90 | 80 | 70 |
| Thickness | - | μm | 50 | 50 | 50 |
| Bore Diameter | Ca | mm | 62 | 55 | 49 |
| Inner diameter Radius | Di | mm | 250 | 251 | 246 |
| - | Ca/Cr | - | 1.09 | 1.08 | 1.09 |
| Circumscribing Circle of Drum | Dc | mm | 210 | 210 | 210 |
| Longitudinal Length of Drum | Lc | mm | 570 | 570 | 570 |
| Heating Length of Drum | Lh | mm | 330 | 330 | 330 |
| - | Lh/Lo | - | 0.57 | 0.57 | 0.57 |
| - | Dc/Di | - | 0.84 | 0.84 | 0.85 |
| Diameter of Rod-Like Roll | d | mm | 15.0 | 15.0 | 15.0 |
| Interaxial Distance between Rod-Like Rolls | L | mm | 19.1 | 19.1 | 19.1 |
| - | d/L | - | 0.79 | 0.79 | 0.79 |
| Number of Turns | N | - | 6 | 7 | 7 |
| Interspace between Turns | S | mm | 12.5 | 12.5 | 12.5 |

- to be cont'd -

EP 0 744 273 B1

| | Reference Example 4 | Reference Example 5 | Reference Example 6 | Reference Example 7 | Reference Example 8 | Reference Example 9 |
|---|---|---|---|---|---|---|
| | PVDC | PVDC | PVDC | PVDC | PVDC | PVDC |
| | 41 | 38 | 48 | 35 | 35 | 38 |
| | 65 | 60 | 75 | 35 | 55 | 60 |
| | 50 | 50 | 50 | 50 | 50 | 50 |
| | 45 | 41 | 52 | 39 | 39 | 41 |
| | 249 | 150 | 148 | 145 | 100 | 102 |
| | 1.10 | 1.08 | 1.08 | 1.11 | 1.08 | 1.08 |
| | 210 | 120 | 120 | 120 | 83 | 83 |
| | 570 | 570 | 570 | 570 | 500 | 500 |
| | 330 | 320 | 320 | 320 | 300 | 300 |
| | 0.57 | 0.56 | 0.56 | 0.56 | 0.6 | 0.6 |
| | 0.84 | 0.80 | 0.81 | 0.83 | 0.83 | 0.81 |
| | 15.0 | 15.0 | 15.0 | 15.0 | 12.0 | 12.0 |
| | 19.1 | 20.5 | 20.5 | 20.5 | 18.4 | 18.4 |
| | 0.79 | 0.73 | 0.73 | 0.73 | 0.65 | 0.65 |
| | 8 | 9 | 7 | 9 | 8 | 8 |
| | 12.5 | 12.5 | 12.5 | 12.5 | 12.5 | 12.5 |

| | | | | | |
|---|---|---|---|---|---|
| Inlet Side Speed | Vi | m/min. | 32.0 | 32.0 | 32.0 |
| Peripheral Speed of Rod-Like Roll | Vf | m/min. | 25.6 | 26.0 | 26.7 |
| Outlet Side Speed | Vo | m/min. | 22.5 | 23.0 | 23.5 |
| Factor | α | - | $0.88 \sim 0.92$ | $0.88 \sim 0.92$ | $0.88 \sim 0.92$ |
| Heated Gas Temperature (NOTE 1) | | °C | 135 | 135 | 135 |
| Cooling Air Temperature (NOTE 2) | | °C | 23 | 23 | 23 |
| Charged Air Pressure | | Pa ($kg/cm^2$) | $9 \times 10^3$ (0.09) | $1 \times 10^4$ (0.10) | $12 \times 10^3$ (0.12) |

EP 0 744 273 B1

| 32.0 | 32.0 | 32.0 | 32.0 | 24.0 | 24.0 |
|---|---|---|---|---|---|
| 27.1 | 22.9 | 23.6 | 25.2 | 20.6 | 21.1 |
| 23.8 | 22.1 | 20.8 | 22.2 | 15.6 | 1.51 |
| $0.88 \sim 0.92$ | $0.88 \sim 0.92$ | $0.88 \sim 0.92$ | $0.88 \sim 0.92$ | $0.88 \sim 0.92$ | $0.88 \sim 0.92$ |
| 135 | 135 | 135 | 135 | 135 | 135 |
| 23 | 23 | 23 | 23 | 23 | 23 |
| $12 \times 10^3$ | $13 \times 10^3$ | $11 \times 10^3$ | $14 \times 10^3$ | $14 \times 10^3$ | $13 \times 10^3$ |
| (0.12) | (0.13) | (0.11) | (0.14) | (0.14) | (0.13) |

NOTE 1: The heated gas temperature was measured at the heated gas inlet port of the main heat-treatment device.

NOTE 2: The cooling gas temperature was measured at the cooling gas inlet port of the main heat-treatment device.

**Claims**

1.  A method of producing a ring-shaped casing film comprising the steps of:

    charging gas in a heat-shrinkable thermoplastic tubular film (1) having a predetermined length;
    spirally feeding said tubular film (1) around a drum-like array of rod-like rolls (2) which are arranged with predetermined gaps therebetween, said rolls being rotated around their axes;
    said process being **characterized by** the further steps of blowing heated gas from the inside of said drum-like array of the rod-like rolls in radial direction through the gaps between said rod-like rolls (2) while said tubular film (1) is fed spirally around said array of rod-like rolls which are rotated around their axes so as to heat and shrink said tubular film;
    thereafter blowing cooling gas in radial direction through the gaps between said rod-like rolls so as to cool said tubular film; and
    taking off said shrunk tubular film from said array of rod-like rolls and discharging the charged gas from said tubular film.

2.  A method of producing a ring-shaped casing film as set forth in claim 1, wherein the peripheral speed of said rod-like rolls (2) is higher than the outlet speed of said tubular film.

3.  A method of producing a ring-shaped casing film as set forth in claim 1, wherein said heated gas and said cooling gas are forcedly blown through the gaps between said rod-like rolls (2) and the gaps between turns of said tubular film (1), and are passed around the outer peripheries of the turns of said tubular film while the latter is fed spirally around the array of rod-like rolls.

4.  A method of producing a ring-shaped casing film as set forth in claim 1, wherein gas is forcedly blown from outside of said array onto the outer peripheries of the turns of said tubular film spirally fed so that the gas blown from the inside of said array of rod-like rolls encounters the gas blown from outside of said array, and wherein the temperature and the blowing speed of the gas forcedly blown from inside of said array is higher than that of the gas blown from outside of said array.

5.  A method of producing a ring-shaped casing film as set forth in claim 1, wherein the volume of the gas blown from the inside of said drum-like array of rod-like rolls is changed in the longitudinal direction of said rolls (2).

6.  A method of producing a ring-shaped casing film as set forth in claim 1, wherein said heat-shrinkage is carried out at a temperature at which the heat-shrinkage rate of said tubular film in the longitudinal direction is not less than 5 %, but not higher than 60 %, and said cooling is carried out at a temperature which is higher than zero °C, and at which said heat-shrinkage rate is not higher than 5 %.

7.  A method of producing a ring-shaped casing film as set forth in claim 1, wherein said tubular film is spirally fed around said array of rod-like rolls (2) under conditions which satisfy the following formulae 1, 2 and 3:

    $$15 \leq L \leq 25 \qquad\qquad 1$$

    $$0,65 \leq d/L \leq 0,85 \qquad\qquad 2$$

    $$0,70 \leq Dc/Di \leq 0,85 \qquad\qquad 3$$

    where d is the diameter in mm of the rod-like rolls, L is the interaxial distance in mm of two adjacent rod-like rolls, Di is the diameter in mm of the turns of the curved tubular film, and Dc is the diameter in mm of a circumscribing circle of the drum.

8.  A method of producing a ring-shaped casing film as set forth in claim 1, wherein said tubular film (1) is spirally fed around said array of rod-like rolls (2) which method satisfies speed conditions given by the following formulae 4 and 5:

$$\alpha Vi \geq Vf \geq Vo \qquad\qquad 4$$

$$Vo = \alpha DiVi / (Ca + Di) \qquad\qquad 5$$

where $\alpha$ is a factor indicating a dimensional change in the longitudinal direction of said tubular film, Ca is the bore diameter in mm of said curved tubular film, Di is the inner diameter in mm of the turns of said curved tubular film, Vf is the peripheral speed in m/min of said rod-like rolls; Vi is the inlet speed of said tubular film and Vo is the outlet speed of said tubular film.

9. A method of producing a ring-shaped casing film as set forth in claim 1, wherein said tubular film (1) is spirally fed under conditions satisfying the following formulae 6 and 7:

$$6 \leq N \leq 12 \qquad\qquad 6$$

$$7 \leq S = 15 \qquad\qquad 7$$

where N is the number of turns of said tubular film wound around said array of rod-like rolls (2) and S is the size in mm of gaps between the turns of said tubular film which is spirally fed.

10. A method of producing a ring-shaped casing film as set forth in claim 1, wherein said tubular film (1) is heated and shrunk by carrying out heat-treatment under the condition given by the following formula:

$$0,45 \leq Lh/Lc \leq 0,65 \qquad\qquad 8$$

wherein Lh is the heating length in the axial direction of said rod-like rolls (2) and Lc is the longitudinal length, that is the sum of heating length + cooling length, of said rod-like rolls.

11. A method of producing a ring-shaped casing film as set forth in claim 1, wherein the pressure of gas charged in said tubular film (1) is adjusted so as to satisfy the following formula 9:

$$1,05 \leq Ca/Cr \leq 1,12$$

wherein Ca is the bore diameter in mm of said curved tubular film, and Cr is the bore diameter in mm of said starting material of said tubular film.

12. An apparatus for producing a ring-shaped casing film, comprising:

a means (8) for continuously introducing a tubular film (1) charged with gas;
an array of a plurality of rod-like rolls (2) which can be rotated about their axes, and which are arranged to form a drum-like shape with gaps therebetween, said array having said introduced tubular film spirally wound therearound;
a drive means for rotating said rod-like rolls around their axes;
a guide means for spirally feeding said tubular film to be wound around said array of rod-like rolls (2);
said apparatus further comprising:

a main heating means (4) located inside of said array of rod-like rolls, for radially blowing heated gas through the gaps between said rod-like rolls to the upstream side of said tubular film spirally fed around said array of rod-like rolls;
a cooling means (7) for radially blowing cooling air through the gaps between said rod-like rolls to the downstream side of said tubular film spirally fed around said array of rod-like rolls; and
a means (9) for taking up said heat-shrunk tubular film from said array of rod-like rolls.

**13.** An apparatus for producing a ring-shaped casing film as set forth in claim 12, wherein said'introducing means (8) is composed of a pair of inlet side pinch rollers, and said taking-up means (9) is composed of a pair of outlet side pinch rollers.

**14.** An apparatus for producing a ring-shaped casing film as set forth in claim 12, wherein said array of rod-like rolls is surrounded by an auxiliary heating means (5) on the upstream side of said tubular film which is spirally fed around said array of rod-like rolls, for blowing heated gas onto the outer peripheries of the turns of said tubular film; and further, an auxiliary cooling means (7) is provided on the downstream side of said tubular film which is spirally fed around said array of rod-like rolls, for blowing cooling air to the outer peripheries of the turns of said tubular film.

**15.** An apparatus for producing a ring-shaped casing film as set forth in claim 13, wherein said inlet side pinch rollers (8) and said outlet side pinch rollers (9) are spaced from said array of rod-like rolls (2), and at least either said inlet side pinch rollers or said outlet pinch rollers are arranged so as to be movable to and from said array so as to adjust the pressure of gas charged in said tubular film.

**16.** An apparatus for producing a ring-shaped casing film as set forth in claim 12, wherein said array of rod-like rolls (2) satisfies the conditions given by the following formulae 10, 11 and 12:

$$15 \leq L \leq 25 \qquad\qquad 10$$

$$0,65 \leq d/L \leq 0,85 \qquad\qquad 11$$

$$0,70 \leq Dc/Di \leq 0,85 \qquad\qquad 12$$

where d is the diameter in mm of the rod-like rolls, L is the interaxial distance in mm of two adjacent rod-like rolls, Di is the diameter in mm of the turns of the tubular film, and Dc is the diameter in mm of a circumscribing circle of the drum.

**17.** An apparatus for producing a ring-shaped casing film as set forth in claim 13, wherein said main heat-treatment means (4) is a gas conduit having several air jet holes in its outer peripheral wall.

**18.** An apparatus for producing a ring-shaped casing film as set forth in claim 14, wherein said auxiliary heating means (5) has a diffusion plate for blowing heated gas to the outer peripheries of the turns of said tubular film, said diffusion plate surrounding said array of rod-like rolls on the upstream side of said tubular film spirally fed around said array.

**19.** An apparatus for producing a ring-shaped casing film as set forth in claim 14, wherein said auxiliary cooling means (7) is composed of a plurality of blowers in combination.

**20.** An apparatus for producing a ring-shaped casing film as set forth in claim 12, wherein said rod-like rolls are coated on their outer surfaces with ethylene tetrafluoride resin or the like.

**21.** An apparatus for producing a ring-shaped casing film as set forth in claim 12, wherein said guide means (3) is composed of guide pins (3a) arranged at predetermined intervals in the longitudinal direction of said rod-like rolls, and extend radially from said array of rod-like rolls.

**22.** An apparatus for producing a ring-shaped casing film as set forth in claim 21, wherein each of said guide pins (3a) is composed of a stationary center shaft and a rotary member rotatably fitted on said stationary center shaft and being furnished with lubricity by ethylene tetrafluoride resin or the like.

**Patentansprüche**

**1.** Verfahren zur Herstellung einer ringförmigen Hüllfolie, das folgende Stufen umfasst:

Einführen von Gas in eine wärmeschrumpfbare thermoplastische Schlauchfolie (1), die vorbestimmte Länge hat,
spiralförmiges Leiten der Schlauchfolie (1) um eine trommelartige Anordnung von stabförmigen Walzen (2), die so angeordnet sind, dass sie vorbestimmte Zwischenräume haben und diese Walzen um ihre Achsen rotieren,

wobei das Verfahren durch die weiteren Stufen **gekennzeichnet** ist:

Blasen von erhitztem Gas aus der Innenseite der trommelartigen Anordnung von stabförmigen Walzen in radialer Richtung durch die zwischen den stabförmigen Walzen (2) befindlichen Zwischenräume, während die Schlauchfolie (1) spiralförmig um die Anordnung von stabförmigen Walzen geleitet wird, die um ihre Achsen rotieren, so dass die Schlauchfolie erhitzt und geschrumpft wird,
nachfolgendes Blasen von Kühlgas in radialer Richtung durch die Zwischenräume zwischen den stabförmigen Walzen, um die Schlauchfolie zu kühlen und
Abnehmen der geschrumpften Schlauchfolie von der Anordnung von stabförmigen Walzen und Ausbringen des eingeführten Gases aus der Schlauchfolie.

2. Verfahren zur Herstellung einer ringförmigen Hüllfolie gemäß Anspruch 1, wobei die Umfangsgeschwindigkeit der stabförmigen Walzen (2) höher als die Austrittsgeschwindigkeit der Schlauchfolie ist.

3. Verfahren zur Herstellung einer ringförmigen Hüllfolie gemäß Anspruch 1, wobei das erhitzte Gas und das Kühlgas zwangsweise durch die Zwischenräume zwischen den stabförmigen Walzen (2) und die Zwischenräume zwischen den Windungen der Schlauchfolie (1) geblasen werden und um den Außenumfang der Windungen der Schlauchfolie geleitet werden, während diese spiralförmig um die Anordnung der stabförmigen Walzen geleitet wird.

4. Verfahren zur Herstellung einer ringförmigen Hüllfolie gemäß Ansprüch 1, wobei Gas zwangsweise von der Außenseite der Anordnung auf den Außenumfang der Windungen der spiralförmig geführten Schlauchfolie geblasen wird, so dass das von der Innenseite der Anordnung der stabförmigen Walzen geblasene Gas das von der Außenseite der Anordnung geblasene Gas trifft und wobei die Temperatur und die Blasgeschwindigkeit des von der Innenseite der Anordnung zwangsweise geblasenen Gases höher ist, als die des von der Außenseite der Anordnung geblasenen Gases.

5. Verfahren zur Herstellung einer ringförmigen Hüllfolie gemäß Anspruch 1, wobei das Volumen des von der Innenseite der trommelartigen Anordnung von stabförmigen Walzen geblasenen Gases in Längsrichtung der Walzen (2) verändert wird.

6. Verfahren zur Herstellung einer ringförmigen Hüllfolie gemäß Anspruch 1, wobei die Wärmeschrumpfung bei einer Temperatur durchgeführt wird, bei der die Wärmeschrumpfungsrate der Schlauchfolie in Längsrichtung nicht weniger als 5 %, jedoch nicht höher als 60 % ist und wobei das Kühlen bei einer Temperatur durchgeführt wird, die höher als 0 °C ist und bei der die Wärmeschrumpfungsrate nicht höher als 5 % ist.

7. Verfahren zur Herstellung einer ringförmigen Hüllfolie gemäß Anspruch 1, wobei die Schlauchfolie unter Bedingungen, welche den nachfolgenden Formeln 1, 2 und 3 genügen, spiralförmig um die Anordnung von stabförmigen Walzen (2) geleitet wird:

$$15 \leq L \leq 25 \hspace{6cm} 1$$

$$0{,}65 \leq d/L \leq 0{,}85 \hspace{5cm} 2$$

$$0{,}70 \leq Dc/Di \leq 0{,}85 \hspace{5cm} 3$$

worin d der Durchmesser der stabförmigen Walzen in mm ist, L der interaxiale Abstand von zwei benachbarten stabförmigen Walzen in mm ist, Di der Durchmesser der Windungen der gebogenen Schlauchfolie in mm ist und Dc der Durchmesser eines die Trommel umschreibenden Kreises in mm ist.

**8.** Verfahren zur Herstellung einer ringförmigen Hüllfolie gemäß Anspruch 1, wobei die Schlauchfolie (1) spiralförmig um die Anordnung von stabförmigen Walzen (2) geführt wird, wobei das Verfahren Bedingungen für die Geschwindigkeit erfüllt, die durch die nachstehenden Formeln 4 und 5 gegeben sind:

$$\alpha Vi \geq Vf \geq Vo \qquad\qquad 4$$

$$Vo = \alpha DiVi / (Ca + Di) \qquad\qquad 5$$

worin $\alpha$ ein Faktor ist, der die Dimensionsänderung der Schlauchfolie in Längsrichtung angibt, Ca der Bohrungsdurchmesser der gebogenen Schlauchfolie in mm ist, Di der Innendurchmesser der Windungen der gebogenen Schlauchfolie in mm ist, Vf die Umfangsgeschwindigkeit der stabförmigen Walzen in m/min. ist, Vi die Eintrittsgeschwindigkeit der Schlauchfolie ist und Vo die Austrittsgeschwindigkeit der Schlauchfolie ist.

**9.** Verfahren zur Herstellung einer ringförmigen Hüllfolie gemäß Anspruch 1, wobei die Schlauchfolie (1) unter Bedingungen, welche die folgenden Formeln 6 und 7 erfüllen, spiralförmig zugeleitet wird:

$$6 \leq N \leq 12 \qquad\qquad 6$$

$$7 \leq S = 15 \qquad\qquad 7$$

worin N die Anzahl der Windungen der Schlauchfolie, die um die Anordnung von stabförmigen Walzen (2) gewickelt ist, bedeutet und S die Größe der Zwischenräume zwischen den Windungen der spiralförmig geleiteteten Schlauchfolie in mm ist.

**10.** Verfahren zur Herstellung einer ringförmigen Hüllfolie gemäß Anspruch 1, wobei die Schlauchfolie (1) dadurch erhitzt und geschrumpft wird, dass eine Wärmebehandlung unter den durch die folgende Formel gegebenen Bedingungen durchgeführt wird:

$$0,45 \leq Lh/Lc \leq 0,65 \qquad\qquad 8$$

worin Lh die Heizlänge der stabförmigen Walzen (2) in Axialrichtung ist und Lc die Länge in Längsrichtung, d. h. die Summe aus Heizlänge plus Kühllänge der stabförmigen Walzen ist.

**11.** Verfahren zur Herstellung einer ringförmigen Hüllfolie gemäß Anspruch 1, wobei der Druck des in die Schlauchfolie (1) eingeführten Gases so eingestellt wird, dass die folgende Formel 9 erfüllt ist:

$$1,05 \leq Ca/Cr \leq 1,12$$

worin Ca der Bohrungsdurchmesser der gebogenen Schlauchfolie in mm ist und Cr der Bohrungsdurchmesser der Ausgangsmaterials der Schlauchfolie in mm ist.

**12.** Vorrichtung zur Herstellung einer ringförmigen Hüllfolie, welche umfasst:

eine Einrichtung (8) zum kontinuierlichen Einführen einer mit Gas beschickten Schlauchfolie (1),
eine Anordnung aus mehreren stabförmigen Walzen (2), die um ihre Achsen rotieren können und die so angeordnet sind, dass sie eine trommelartige Gestalt mit Zwischenräumen ausbilden, wobei um die Anordnung die eingeführte Schlauchfolie spiralförmig gewickelt ist,
eine Antriebseinrichtung für die Rotation der stabförmigen Walzen um ihre Achsen,
eine Führungseinrichtung zur spiralförmigen Zuführung der Schlauchfolie, um diese um die Anordnung von stabförmigen Walzen (2) zu wickeln,

wobei die Vorrichtung weiterhin umfasst:

eine Haupt-Heizvorrichtung (4), die sich im Inneren der Anordnung von stabförmigen Walzen befindet, um erhitztes Gas radial durch die Zwischenräume zwischen den stabförmigen Walzen auf die stromaufwärts liegende Seite der spiralförmig um die Anordnung von stabförmigen Walzen geführten Schlauchfolie zu blasen, eine Kühlvorrichtung (7) zum radialen Blasen von Kühlluft durch die Zwischenräume zwischen den stabförmigen Walzen auf die stromabwärts liegende Seite der spiralförmig um die Anordnung von stabförmigen Walzen geführten Schlauchfolie, und

eine Einrichtung (9) zum Abnehmen der wärmegeschrumpften Schlauchfolie von der Anordnung von stabförmigen Walzen.

13. Vorrichtung zur Herstellung einer ringförmigen Hüllfolie gemäß Anspruch 12, wobei die Einrichtung zum Einführen (8) aus einem Paar von eintrittsseitigen Quetschwalzen und die Entnahmevorrichtung (9) aus einem Paar von austrittseitigen Quetschwalzen besteht.

14. Vorrichtung zur Herstellung einer ringförmigen Hüllfolie gemäß Anspruch 12, wobei die Anordnung von stabförmigen Walzen von einer Hilfs-Heizvorrichtung (5) auf der stromaufwärts liegenden Seite der Schlauchfolie, die spiralförmig um die Anordnung von stabförmigen Walzen geführt wird, umgeben ist, um erhitztes Gas auf den Außenumfang der Windungen der Schlauchfolie zu blasen und dass außerdem eine Hilfs-Kühlvorrichtung (7) auf der stromabwärts liegenden Seite der Schlauchfolie vorgesehen ist, die spiralförmig um die Anordnung von stabförmigen Walzen geführt wird, um Kühlluft auf den Außenumfang der Windungen der Schlauchfolie zu blasen.

15. Vorrichtung zur Herstellung einer ringförmigen Hüllfolie gemäß Anspruch 13, wobei die eintrittsseitigen Quetschwalzen (8) und die austrittseitigen Quetschwalzen (9) im Abstand von der Anordnung von stabförmigen Walzen (2) angeordnet sind und wobei mindestens eine der eintrittsseitigen Quetschwalzen oder der austrittsseitigen Quetschwalzen so angeordnet ist, dass sie in Richtung zu dieser Anordnung oder von dieser Anordnung weg beweglich ist, um den Druck des in die Schlauchfolie eingeführten Gases einzustellen.

16. Vorrichtung zur Herstellung einer ringförmigen Hüllfolie gemäß Anspruch 12, wobei die Anordnung von stabförmigen Walzen (2) die durch die folgenden Formeln 10, 11 und 12 gegebenen Bedingungen erfüllt

$$15 \leq L \leq 25 \qquad\qquad 10$$

$$0{,}65 \leq d/L \leq 0{,}85 \qquad\qquad 11$$

$$0{,}70 \leq Dc/Di \leq 0{,}85 \qquad\qquad 12$$

wobei d der Durchmesser der stabförmigen Walzen in mm ist, L der interaxiale Abstand von zwei benachbarten stabförmigen Walzen in mm ist, Di der Durchmesser der Windungen der Schlauchfolie in mm ist und Dc der Durchmesser eines die Trommel umschreibenden Kreises in mm ist.

17. Vorrichtung zur Herstellung einer ringförmigen Hüllfolie gemäß Anspruch 13, wobei die Hauptvorrichtung zur Wärmebehandlung (4) eine Gasleitung ist, die mehrere Druckluftlöcher in ihrer Umfangswandung aufweist.

18. Vorrichtung zur Herstellung einer ringförmigen Hüllfolie gemäß Anspruch 14, wobei die Hilfs-Heizvorrichtung (5) eine Diffusionsplatte zum Blasen von erhitztem Gas auf den Außenumfang der Windungen der Schlauchfolie hat, wobei die Diffusionsplatte die Anordnung von stabförmigen Walzen auf der stromaufwärts liegenden Seite der spiralförmig um die Anordnung geführten Schlauchfolie umgibt.

19. Vorrichtung zur Herstellung einer ringförmigen Hüllfolie gemäß Anspruch 14, wobei die Hilfs-Kühlvorrichtung (7) aus mehreren Gebläsen in Kombination besteht.

20. Vorrichtung zur Herstellung einer ringförmigen Hüllfolie gemäß Anspruch 12, wobei die Außenflächen der stabförmigen Walzen mit einem Tetrafluorethylenharz oder dergleichen überzogen sind.

21. Vorrichtung zur Herstellung einer ringförmigen Hüllfolie gemäß Anspruch 12, wobei die Führungseinrichtung (3) aus Führungsstiften (3a) besteht, die unter vorbestimmten Abständen in Längsrichtung der stabförmigen Walzen angeordnet sind und sich radial von dieser Anordnung von stabförmigen Walzen erstrecken.

**22.** Vorrichtung zur Herstellung einer ringförmigen Hüllfolie gemäß Anspruch 21, wobei jeder der Führungsstifte (3a) aus einer stationären Zentralwelle und einem rotierenden Teil, das drehbar auf der stationären Zentralwelle angebracht ist, besteht und mit Hilfe von Tetrafluorethylenharz oder dergleichen mit Gleitfähigkeit versehen ist.

**Revendications**

**1.** Procédé de production d'un film d'emballage de forme annulaire, comprenant les étapes consistant à :

charger du gaz dans un film tubulaire thermoplastique thermorétrécissable (1) présentant une longueur prédéterminée;
faire avancer ledit film tubulaire (1) en spirale autour d'une série de rouleaux (2) en forme de barre agencés en tambour, qui sont agencés avec entre eux des interstices prédéterminés, lesdits rouleaux étant mis en rotation autour de leur axe;
ledit procédé étant **caractérisé par** les étapes supplémentaires consistant à
souffler un gaz chauffé depuis l'intérieur de ladite série de rouleaux en forme de barre agencés en tambour, dans une direction radiale à travers les interstices situés entre lesdits rouleaux (2) en forme de barre, pendant que ledit film tubulaire (1) est avancé en spirale autour de ladite série de rouleaux en forme de barre qui sont mis en rotation autour de leur axe, de manière à chauffer et faire rétrécir ledit film tubulaire;
ensuite, souffler un gaz de refroidissement dans la direction radiale à travers les interstices situés entre lesdits rouleaux en forme de barre, de manière à refroidir ledit film tubulaire, et
enlever ledit film tubulaire rétréci de ladite série de rouleaux en forme de barre et décharger le gaz chargé dans ledit film tubulaire.

**2.** Procédé de production d'un film d'emballage de forme annulaire selon la revendication 1, dans lequel la vitesse périphérique desdits rouleaux (2) en forme de barre est supérieure à la vitesse de sortie dudit film tubulaire.

**3.** Procédé de production d'un film d'emballage de forme annulaire selon la revendication 1, dans lequel ledit gaz chauffé et ledit gaz de refroidissement sont soufflés de manière forcée à travers les interstices formés entre lesdits rouleaux (2) en forme de barre, et les interstices entre les tours dudit film tubulaire (1) et sont passés autour de la périphérie extérieure des tours dudit film tubulaire pendant que ce dernier est avancé en spirale autour de la série de rouleaux en forme de barre.

**4.** Procédé de production d'un film d'emballage de forme annulaire selon la revendication 1, dans lequel du gaz est soufflé de manière forcée depuis l'extérieur de ladite série sur la périphérie extérieure des tours dudit film tubulaire avancé en spirale, de telle sorte que le gaz soufflé depuis l'intérieur de ladite série de rouleaux en forme de barre rencontre l'air soufflé de ladite série, et dans lequel la température et la vitesse de soufflage du gaz soufflé de manière forcée depuis l'intérieur de ladite série sont supérieures à celles du gaz soufflé depuis l'extérieur de ladite série.

**5.** Procédé de production d'un film d'emballage de forme annulaire selon la revendication 1, dans lequel le volume du gaz soufflé depuis l'intérieur de ladite série de rouleaux en forme de barre agencés en tambour varie dans le sens de la longueur desdits rouleaux (2).

**6.** Procédé de production d'un film d'emballage de forme annulaire selon la revendication 1, dans lequel ledit rétrécissement thermique est conduit à une température à laquelle le taux de rétrécissement thermique desdits films tubulaires dans la direction longitudinale n'est pas inférieur à 5 % et n'est pas supérieur à 60 %, et ledit refroidissement est conduit à une température qui est supérieure à zéro ° C et à laquelle ledit taux de rétrécissement thermique n'est pas supérieur à 5 %.

**7.** Procédé de production d'un film d'emballage de forme annulaire selon la revendication 1, dans lequel ledit film tubulaire est avancé en spirale autour de ladite série de rouleaux (2) en forme de barre dans des conditions qui satisfont les formules 1, 2 et 3 ci-dessous :

$$15 \leq L \leq 25 \qquad\qquad 1$$

$$0,65 \leq d/L \leq 0,85 \qquad\qquad 2$$

$$0,70 \leq Dc/Di \leq 0,85 \qquad\qquad 3$$

dans lesquelles d est le diamètre en mm des rouleaux en forme de barre, L est la distance interaxiale en mm entre deux rouleaux en forme de barre adjacents, Di est le diamètre en mm des tours du film tubulaire courbé et Dc est le diamètre en mm d'un cercle circonscrit au tambour.

8.  Procédé de production d'un film d'emballage de forme annulaire selon la revendication 1, dans lequel ledit film tubulaire (1) est avancé en spirale autour de ladite série de rouleaux (2) en forme de barre, lequel procédé satisfait des conditions de vitesse données par les formules 4 et 5 ci-dessous:

$$\alpha Vi \geq Vf \geq Vo \qquad\qquad 4$$

$$Vo = \alpha DiVi / (Ca + Di) \qquad\qquad 5$$

dans lesquelles $\alpha$ est un facteur indiquant une modification de dimension dans le sens de la longueur dudit film tubulaire, Ca est le diamètre intérieur en mm dudit film tubulaire incurvé, Di est le diamètre intérieur en mm des tours dudit film tubulaire incurvé, Vf est la vitesse périphérique en m/min desdits rouleaux en forme de barre, Vi est la vitesse d'entrée dudit film tubulaire et Vo est la vitesse de sortie dudit film tubulaire.

9.  Procédé de production d'un film d'emballage de forme annulaire selon la revendication 1, dans lequel ledit film tubulaire (1) est avancé en spirale dans les conditions qui satisfont les formules 6 et 7 ci-dessous :

$$6 \leq N \leq 12 \qquad\qquad 6$$

$$7 \leq S = 15 \qquad\qquad 7$$

dans lesquelles N est le nombre de tours dudit film tubulaire enroulé autour de ladite série de rouleaux (2) en forme de barre et S est la taille en mm des interstices entre les tours dudit film tubulaire qui est avancé en spirale.

10.  Procédé de production d'un film d'emballage de forme annulaire selon la revendication 1, dans lequel ledit film tubulaire (1) est chauffé et rétréci en exécutant un traitement thermique dans les conditions données par la formule ci-dessous :

$$0,45 \leq Lh/Lc \leq 0,65 \qquad\qquad 8$$

dans laquelle Lh est la longueur de chauffage dans la direction axiale desdits rouleaux (2) en forme de barre et Lc est la longueur longitudinale, c'est-à-dire la somme de la longueur de chauffage et de la longueur de refroidissement desdits rouleaux en forme de barre.

11.  Procédé de production d'un film d'emballage de forme annulaire selon la revendication 1, dans lequel la pression du gaz chargé dans ledit film (1) est ajustée de manière à satisfaire la formule 9 ci-dessous :

$$1,05 \leq Ca/Cr \leq 1,12$$

dans laquelle Ca est le diamètre intérieur en mm dudit film tubulaire incurvé et Cr est le diamètre intérieur en mm dudit matériau de départ dudit film tubulaire.

12.  Appareil pour la production d'un film d'emballage de forme annulaire, comprenant :

un moyen (8) pour introduire en continu un fil tubulaire (1) chargé en gaz;

une série constituée d'une pluralité de rouleaux (2) en forme de barre qui peuvent tourner autour de leur axe et qui sont agencés de manière à former la forme d'un tambour avec des interstices entre eux, ledit film tubulaire introduit étant enroulé en spirale autour desdites séries;

un moyen d'entraînement pour faire tourner lesdits rouleaux en forme de barre autour de leur axe;

un moyen de guidage pour faire avancer en spirale ledit film tubulaire pour l'enrouler autour de ladite série de rouleaux (2) en forme de barre;

ledit appareil comprenant en outre :

un moyen principal de chauffage (4) situé à l'intérieur de ladite série de rouleaux en forme de barre, pour souffler un gaz chauffé radialement à travers les interstices situés entre lesdits rouleaux en forme de barre vers le côté amont du film tubulaire enroulé en spirale autour de ladite série de rouleaux en forme de barre;

un moyen de refroidissement (7) pour souffler radialement de l'air de refroidissement à travers les interstices situés entre lesdits rouleaux en forme de barre vers le côté aval dudit film tubulaire avancé en spirale autour de ladite série de rouleaux en forme de barre; et

un moyen (9) pour reprendre ledit film tubulaire rétréci thermiquement de ladite série de rouleaux en forme de barre.

**13.** Appareil pour la production d'un film d'emballage de forme annulaire selon la revendication 12, dans lequel ledit moyen d'introduction (8) est constitué d'une paire de rouleaux de pinçage situés du côté entrée et ledit moyen de reprise (9) est constitué d'une paire de rouleaux de pinçage situés du côté de la sortie.

**14.** Appareil pour la production d'un film d'emballage de forme annulaire selon la revendication 12, dans lequel ladite série de rouleaux en forme de barre est entourée par un moyen de chauffage auxiliaire (5) situé du côté amont dudit film tubulaire qui est avancé en spirale autour de ladite série de rouleaux en forme de barre, pour souffler un gaz chauffé sur la périphérie extérieure des tours desdits films tubulaires; et en outre un moyen de refroidissement auxiliaire (7) est prévu sur le côté aval dudit film tubulaire qui est avancé en spirale autour de ladite série de rouleaux en forme de barre, pour souffler de l'air de refroidissement sur la périphérie extérieure des tours dudit film tubulaire.

**15.** Appareil pour la production d'un film d'emballage de forme annulaire selon la revendication 13, dans lequel lesdits rouleaux de pinçage (8) situés du côté de l'entrée et lesdits rouleaux de pinçage (9) situés du côté de la sortie sont situés à distance de ladite série de rouleaux (2) en forme de barre, et les rouleaux de pinçage situés du côté de l'entrée et/ou les rouleaux de pinçage situés du côté de la sortie sont agencés de manière à pouvoir être approchés et éloignés de ladite série de manière à ajuster la pression du gaz chargé dans ledit film tubulaire.

**16.** Appareil pour la production d'un film d'emballage de forme annulaire selon la revendication 12, dans lequel ladite série de rouleaux (2) en forme de barre satisfait les conditions données par les formules 10, 11 et 12 ci-dessous :

$$15 \leq L \leq 25 \qquad\qquad 10$$

$$0,65 \leq d/L \leq 0,85 \qquad\qquad 11$$

$$0,70 \leq Dc/Di \leq 0,85 \qquad\qquad 12$$

dans lesquelles d est le diamètre en mm des rouleaux en forme de barre, L est la distance interaxiale en mm entre deux rouleaux en forme de barre adjacents, Di est le diamètre en mm des tours du film tubulaire et Dc est le diamètre en mm d'un cercle circonscrit au tambour.

**17.** Appareil pour la production d'un film d'emballage de forme annulaire selon la revendication 13, dans lequel moyen principal de traitement thermique (4) est un conduit de gaz présentant plusieurs trous de projection d'air dans sa paroi périphérique extérieure.

**18.** Appareil pour la production d'un film d'emballage de forme annulaire selon la revendication 14, dans lequel ledit moyen auxiliaire de chauffage (5) présente une plaque de diffusion pour souffler un gaz chauffé vers la périphérie extérieure des tours dudit film tubulaire, ladite plaque de diffusion entourant ladite série de rouleaux en forme de barre du côté amont dudit film tubulaire avancé en spirale autour de ladite série.

19. Appareil pour la production d'un film d'emballage de forme annulaire selon la revendication 14, dans lequel ledit moyen auxiliaire de refroidissement (7) est constitué d'une pluralité de ventilateurs en combinaison.

20. Appareil pour la production d'un film d'emballage de forme annulaire selon la revendication 12, dans lequel lesdits rouleaux en forme de barre sont revêtus sur leur surface extérieure d'une résine de tétrafluorure d'éthylène ou similaire.

21. Appareil pour la production d'un film d'emballage de forme annulaire selon la revendication 12, dans lequel lesdits moyens de guidage (3) sont constitués de tiges de guidage (3a) agencées à des intervalles prédéterminés dans le sens de la longueur desdits rouleaux en forme de barre et débordent radialement de ladite série de rouleaux en forme de barre.

22. Appareil pour la production d'un film d'emballage de forme annulaire selon la revendication 21, dans lequel chacune desdites tiges de guidage (3a) est constituée d'un arbre central stationnaire et d'un organe rotatif installé à rotation sur ledit arbre central stationnaire et lubrifié par une résine de tétrafluorure d'éthylène ou similaire.

FIG.1a

# FIG. 1b

## FIG. 2a

## FIG. 2b

## FIG. 3a

## FIG. 3b

# FIG. 4a

# FIG. 4b

# FIG. 5

FIG. 6